# EUROPEAN PATENT APPLICATION

(11) **EP 4 015 270 A1**
(43) Date of publication of application: **22.06.2022**
(21) Application number: 18774587.2
(22) Date of filing: 29.03.2018
(51) Int. Cl.: B60J 11/04, A62C 2/16, A62C 3/02

(54) **FIRE-RESISTANT PROTECTOR FOR VEHICLES**

(30) Priority: 29.03.2017 ES 201730365 U
(71) Applicant: JSP Wildfire Security SL, 46530 Puzol (Valencia) (ES)
(72) Inventor: SEBASTIÀ PORTALÉS, Juan, 46530 Puzol (Valencia) (ES)
(74) Representative: Sahuquillo Huerta, Jesús
(86) International application number: PCT/ES2018/070286
(87) International publication number: WO 2018/178496

(57) **Abstract**

The invention relates to a fire-resistant protector for vehicles, comprising a first body (1) formed by at least two layers (10, 11) which are joined to one another and wherein the first (10) of said layers is formed by a sheet of aluminum and the second (11) is formed by a layer of ceramic material, wherein the body (1) includes a second body (2) in the lower part (1a) thereof in the form of a fire-resistant fabric portion which permits the aligning of said second body (2) in relation to the ground (7), wherein the first body (1) includes securing means (3) which permit the secure joining of the first body (1) to the vehicle (5), and wherein the first body (1) includes adjacent bodies (4) on at least one of its sides, in the zone corresponding to the opening zone of the door of the vehicle (5), which define an opening zone for said doors of the vehicle (5).

## Description

The object of this report is a fireproof protector for vehicles, consisting of a fireproof tarpaulin incorporating a portion of tarpaulin with the same characteristics in its lower part, to flush to the ground, and finally some means of fixing, such as girths or similar, which allow the tarpaulin to be firmly attached to the vehicle and prevent it from flying.

### Background art

Nowadays, in a forest fire, when a person is trapped in his vehicle, he has little chance of escaping, whether he is a private individual, or a professional who has been surprised by the direction of the fire.

In a few seconds, the fire crosses the position where the vehicle is, destroying everything in its path, reducing visibility as a consequence of the smoke, making the escaping difficult and dangerous, as there are many risks of an accident.

The user who is trapped in the passenger compartment of the vehicle is inexorably destined to die or suffer significant injuries due to heat and smoke, as it depends on the resistance of the vehicle and its materials that act as a screen against radiation.

To try to alleviate this problem, the applicant is aware of the existence of individual fire shelters, known as "fire shelters" (https://en.wikipedia.org/wiki/Fire), very popular in their use by professionals in the United States of America, which are essentially composed of a fireproof canvas, with which the user covers his body, creating a cavity where he can wait for the fire to pass. The problem with these shelters is that they protect against the radiation of flames, but they do not protect the user from the smoke, causing the user to have great confidence where deadly accidents have already occurred.

Similarly, the applicant is aware of the existence of patent US7084083 which describes a fire protection system composed of a heat and fire-resistant material, comprising a first outer layer composed of a fiberglass fabric that has an intumescent coating resistant to heat, water and impact. A second inner layer which is a layer of sheet metal to reflect heat and eliminate heat convection transfer. A third inner layer which is a refractory blanket with low conductivity to reduce the transmission of heat. And a fourth inner layer which is a layer of sheet metal to reflect heat and eliminate heat convection transfer.

Similarly, the Spanish patent ES 2 286 955 describes some multilayered fire-resistant tarpaulins for the control and extinction of forest fires and prescribed burns in forest or agricultural areas, characterized by being composed of one or more metal sheets with a reflecting surface, as the main element to achieve reflection of heat radiation and to be impermeable to hot gases, accompanied and protected against physical stress and very high temperatures by one or more layers of fabric or felt of artificial mineral fibers, sheets of mineral-based paper and/or wire cloth, all layers joined by mechanical joints, such as sewing with metal thread, stapling or riveting, the canvas being flexible, foldable and a roll-up multilayered firewall, weighing less than 1.5 Kg/m2 and a thickness of less than 1.5 millimeters.

The US patent US20100294520 describes a fire protection system that includes: (a) a fire shield that can extend from a non-deployed configuration to a configuration deployed in response to an activation signal to protect an object to be protected from an external fire; and (b) means of deployment which can be activated by such a signal to extend such fire protection to the deployed configuration.

Finally, the Spanish patent ES 2 566 252 describes a thermal protector of fireproof and impermeable tires, of the type of which are a cover which envelopes the tire, characterized because it is comprised of: An outer layer of fire-resistant, fire-resistant, impermeable and reflective material with heat-reflection capacity, one or more inner layers of fireproof, fire-resistant and impermeable material, thermo-sealed seams sewn with fire-resistant thread, a height-adjustable system of thermal protection of the lower portion of the tire, adaptable to the different models and sizes of tires, a system of anchorage to the tire on the inner part, quick-opening supports designed to introduce the hands placed on the anchorage system and structural elements that guarantee its deployment and the maintenance of its internal structure, adaptable to the different models and sizes of tires, a system of anchorage to the tire on the inner part, quick-opening supports designed to introduce the hands placed on the anchorage system and structural elements that guarantee its deployment and the maintenance of its internal structure.

None of the documents exposed or known in the state of the art, solve the problem arranged in the same way or similar to the way the present invention does.

### Summary of the invention

The technical problem which is solved by the present invention is to obtain an element of protection for vehicles (regardless of their size) against fire, either at a private or professional level. For this, the fireproof protector for vehicles, object of the present memory, which comprises a first body that in its lower part incorporates a second body as a supplementary portion that allows the aforementioned second body to be flush with the terrain, and where, on its sides, it incorporates adjacent bodies that define an opening area of the vehicle door. And where, in turn, the protector incorporates two means of fastening, which allow the first body to be firmly attached to the vehicle.

Thanks to its design, the protector recommended here will become a particularly useful tool for fire brigades, army intervention units, forestry brigades or similar, which may be surprised by the virulent action of fire.

Thus, if a professional team of workers (firefighters, foresters, military) were surprised by the action of the fire, and did not have a safe escape, it would be enough to install the protector recommended here on the vehicle, fixing it solidly to the same by its external part, and tensing it from the inside once the professionals are protected inside the vehicle.

In this way, they will be able to wait for the fire to pass inside the cabin of the vehicle, being more isolated than if they opted for other solutions such as those known in the state of the art.

For this reason, the protector presented here grants greater safety to the occupants of the vehicle, since, on the one hand, the fire will not reach the vehicle due to its fireproof characteristics, which implies a first safety barrier against fire and the increase in temperature it causes, since the refuge creates an area isolated from the environment in which it is located.

As the vehicle is not in direct contact with the fire, the thermal protection characteristics of the fire will not be altered, so that the increase in temperature suffered by the interior of the vehicle will be much lower than in any other assimilable situation.

Once the zone is stabilized, the occupants of the vehicle will be able to free to leave it and resume their activity in a safe way and in suitable conditions for the circulation.

Although the protector presented here, as has been said, will be of greater use to those professionals who may be surprised by the action of the flames in a fire. It is very useful for those who have homes (fixed or occasional) in wooded areas, where a fire can spread quickly. Thus, the protector presented here, will be a tool of great importance, to create an area isolated from fire until professional help services arrive to their aid or in case their escape is impaired.

Throughout the description and the claims, the word "comprises" and its variants are not intended to exclude other technical characteristics, additives, components or steps. For experts in the field, other objects, advantages and features of the invention will be derived partly from the description and partly from the practice of the invention. The following examples and drawings are provided by way of illustration and are not intended to restrict the present invention. In addition, the present invention covers all possible combinations of particular and preferred accomplishments indicated herein.

### Brief description of the drawings

The following is a very brief description of a series of drawings that help to better understand the invention and that are expressly related to the embodiment of the invention that is presented as a non-limiting example of it.

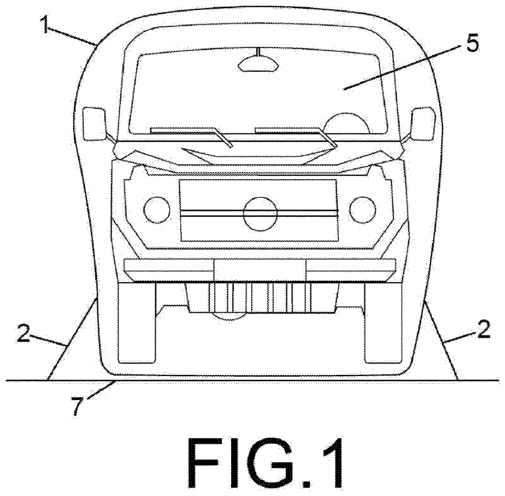

Fig.1 Shows a view of the fireproof vehicle protector, object of the present invention, correctly placed in the vehicle.

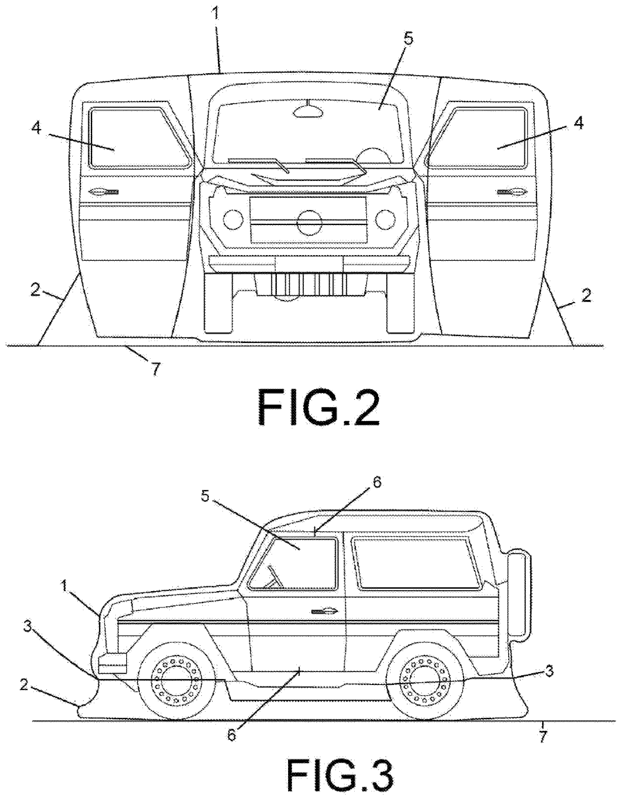

Fig.2 Shows a front view of the vehicle protector, object of the present invention, with the vehicle having its doors open.
Fig.3 Shows a side view of the vehicle flame retardant protector, subject of this invention, in use.

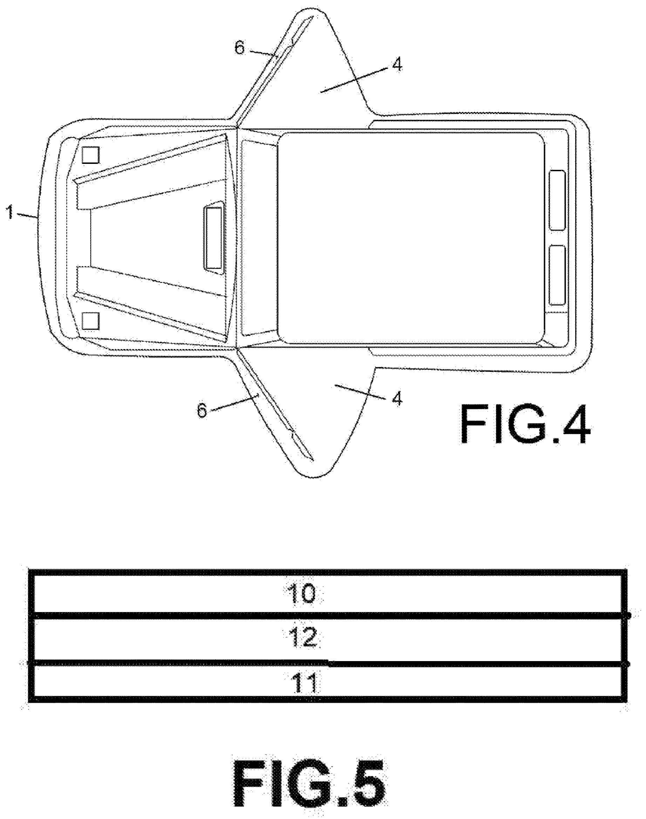

Fig.4 Shows a plan view of the vehicle flame retardant protector, object of the present invention, in use.
Fig.5 Shows a cross-section of the vehicle flame retardant protector, which is the subject of this invention.

### Detailed description of a preferred embodiment of the invention

The attached figures show the preferred embodiment of the invention. More specifically, the fireproof protector for vehicles is characterized by comprising a first body (1) composed of at least two layers (10,11) joined together, the first of which (10) is composed of an aluminum foil of a thickness of between 10 and 30 microns, its preferred measure being 20 microns thick, and whose function will be to protect from the radiation of fire. And the second of these layers (11) being conformed by a layer of ceramic fabric, in charge of protecting from heat at high temperatures.

In a preferred embodiment, the body (1) will have a third layer (12) located in an intermediate way between the layers (10,11) that is composed by an intumescent woven or non-woven fabric, and whose function will be to expand and provide more thermal insulation over a longer period of time.

The function of the intumescent fabric is to expand and provide more thermal insulation over a longer period of time.

And where, said body (1) presents in its lower part (the) a second body (2) as a portion of supplementary fabric that allows the mentioned second body (2) to go up to the ground (7). The first body (1) will incorporate a means of attachment (3), which will allow the first body (1) to be firmly attached to the vehicle (5), thus preventing it from flying.

These means of subjection (3), will be materialized or will incorporate a fireproof covering, in such a way that its resistance and function is not affected by the action of the fire.

In a practical implementation, the means of restraint (3) shall be straps, elastic means of restraint or equivalent means of restraint.

The first body (1) incorporates adjacent bodies (4) in at least one of its sides, in the area coinciding with the opening area of the door, which allows the opening of the vehicle door (5). Internally, these adjoining bodies (4) will incorporate a means of tensioning (6) that will allow these zones to be adjusted and glued to the vehicle (5) to prevent air from entering and raising the canvas, receiving the direct impact of the flame, creating an isolated zone as isolated as possible from the environment.

These adjacent bodies (4) may be independent or integrated into the body itself (1). The means of tensioning (6) that incorporate the adjacent bodies (4), in a practical embodiment, will be some tensors, some means of tensioning or equivalent.

In addition, the protector presented here, will be folded and housed in a box or similar, which will allow rapid access and deployment of the body (1) performing the maneuver in a few seconds, vital in these situations of danger. This box will be permanently fixed to the vehicle, or can be quickly fixed in case of emergency, by means of a system of magnets to the body of the vehicle.

In a particular embodiment, the body (1) shall weigh less than one thousand grams per square meter; and shall be capable of withstanding continuous temperatures exceeding 800°C for intervals of time longer than sixty seconds, which will provide it with sufficient security to resist the action of fire safely.

In a practical embodiment, the second layer (11) will have a thermal resistance of the order of 1000° C, a thickness of the order of 0.5 and 1.3 mm; and a grammage of the order of 300 and 1250 g/m².

## Claims

1. Fire-resistant protector for vehicles comprising a first body (1) composed of at least two layers (10,11) joined together **characterized in that** and where the first of these layers (10) is made up of an aluminum foil and the second of these (11) is made up of a layer of ceramic fabric; and wherein in its lower part (1a) the body (1) incorporates a second body (2) in the form of a fire-resistant fabric portion that allows the aforementioned second body (2) to be flush with the ground (7); and wherein the first body (1) incorporates means of attachment (3), which allow the first body (1) to be firmly attached to the vehicle (5); and wherein the first body (1) incorporates adjacent bodies (4) on at least one of its sides, in the area coinciding with the opening area of the vehicle door (5), defining an opening area for such vehicle doors (5).

2. Fire-resistant protector according to claim 1 wherein the body (1) has a third layer (12) intermediate between the layers (10,11) composed of an intumescent woven or non-woven fabric, the function of which will be to expand and provide more thermal insulation over a longer period of time.

3. Fire-resistant protector according to any of the claims 1-2 wherein the first layer (10) has a thickness of between 10 and 30 microns, being the preferred measurement 20 microns.

4. Protector according to any of the claims 1 - 3 where the adjacent bodies (4) are independent bodies attached to the first body (1).

5. Protector according to any of the claims 1 - 4 where the adjacent bodies (4) are integrated in the first body (1).

6. Protector according to any of the claims 1 - 5 in which these adjacent bodies (4) incorporate internal means of tensioning (6) that allow these zones to be adjusted and glued to the vehicle (5) to prevent air from entering, creating an area as isolated as possible from the environment.

7. Protector according to any of the claims 1 - 6 wherein the means of tensioning that incorporate the adjacent bodies (4) are tensors, means of tensioning or equivalent means.

8. Protector according to any of the claims 1 - 7 where the means of fastening (3) are materialized in a fireproof material.

9. Protector according to any of the claims 1 - 8 where the means of fastening (3) are materialized in a fireproof material covering.

10. Protector according to any of the claims 1 - 9 in which the means of attachment (3) are girths or equivalent means of attachment.

11. Protector according to any of the claims 1 - 10 where the first body (1) is folded and housed in a box or similar.

12. Protector according to any of the claims 1 - 11 where the body (1) weighs less than a thousand grams per square meter and is capable of withstanding continuous temperatures above 800°C for intervals of time greater than sixty seconds.

13. Protector according to any of the claims 1 - 12 where the second layer (11) has a thermal resistance of the order of 1000°C, a thickness of the order of 0.5 and 1.3 mm, and a grammage of the order of between 300 and 1250 g/m².

## Amended claims

### Amended claims under Art. 19.1 PCT

1. Fire-resistant protector for vehicles comprising a first body (1) composed of at least two layers (10,11) joined together and where the first of these layers (10) is made up of an aluminum foil and the second of these (11) is made up of a layer of ceramic fabric; and because in its lower part (1a) the body (1) incorporates a second body (2) in the form of a fire-resistant fabric portion that allows the aforementioned second body (2) to be flush with the ground (7); and because the first body (1) incorporates means of attachment (3), which allow the first body (1) to be firmly attached to the vehicle (5); and because the first body (1) incorporates adjacent bodies (4) on at least one of its sides, in the area coinciding with the opening area of the vehicle door (5) defining an opening area for such vehicle doors (5) **characterized in that** the first body (1) having a third layer (12) intermediate between the layers (10,11) composed of an intumescent woven or non-woven fabric the function of which will be to expand and provide more thermal insulation over a longer period of time; and wherein the first layer (10) has a thickness of between 10 and 30 microns.

2. Protector according to claim 1 wherein the adjacent bodies (4) are independent bodies attached to the first body (1).

3. Protector according to any of the claims 1 - 2 where the adjacent bodies (4) are integrated in the first body (1).

4. Protector according to any of the claims 1 - 3 in which these adjacent bodies (4) incorporate internal means of tensioning (6) that allow these zones to be adjusted and glued to the vehicle (5) to prevent air from entering, creating an area as isolated as possible from the environment.

5. Protector according to any of the claims 1 - 4 where the means of tensioning that incorporate the adjacent bodies (4) are tensors, means of tensioning or equivalent means.

6. Protector according to any of the claims 1 - 5 where the means of fastening (3) are materialized in a fireproof material.

7. Protector according to any of the claims 1 - 6 where the means of fastening (3) are materialized in a fireproof material covering.

8. Protector according to any of the claims 1 - 7 in which the means of attachment (3) are girths or equivalent means of attachment.

9. Protector according to any of the claims 1 - 8 wherein the first body (1) is folded and housed in a box or similar.

10. Protector according to any of the claims 1 - 9 wherein the first body (1) weighs less than a thousand grams per square meter and is capable of withstanding continuous temperatures above 800°C for intervals of time greater than sixty seconds.

11. Protector according to any of the claims 1 - 10 wherein the second layer (11) has a thermal resistance of the order of 1000°C, a thickness of the order of 0.5 and 1.3 mm, and a grammage of the order of between 300 and 1250 g/m².
